# EUROPÄISCHE PATENTSCHRIFT

(11) **EP 0 386 293 B1**
(45) Veröffentlichungstag und Bekanntmachung des Hinweises auf die Patenterteilung: **10.08.1994**
(21) Anmeldenummer: 89104170.9
(22) Anmeldetag: 09.03.1989
(51) Int. Cl.: B23B 31/10

(54) **Zentrierspannanordnung**
Device for centering and clamping
Dispositif de centrage et de serrage

(43) Veröffentlichungstag der Anmeldung: 12.09.1990
(73) Patentinhaber: Fischer, David, D-63743 Aschaffenburg (DE); Kohlert, Rudolf, D-63811 Stockstadt (DE)
(72) Erfinder: Fischer, David, D-63743 Aschaffenburg (DE); Kohlert, Rudolf, D-63811 Stockstadt (DE)
(74) Vertreter: Bischof, Hans-Jochen, Dipl.-Ing.

(56) Entgegenhaltungen:
- FR-A- 2 613 269
- GB-A- 459 573
- GB-A- 2 041 262

## Beschreibung

Die Erfindung bezieht sich auf eine Zentrierspannanordnung gemäß des Oberbegriffs des Anspruchs 1 (siehe GB-A-45 95 73). Die Zentrierspannschieber werden gegenläufig bewegt, und zwar über ein Längsbewegungsgestänge. Die Längsbewegungsstange wird an ihren Enden in einem Gehäuse geführt, in dem auch die Kolben angeordnet sind, die die Kraftübertragung auf die Zentrierspannschieber bewirken.

Die GB-A-45 95 73 beschreibt eine Zentrierspannanordnung, bei der der Antrieb der Zentrierspannbacken mit Hilfe von zwei längsbewegten Kolben eingeleitet wird. Die beiden Kolben sind starr mit einander über eine Längsstange verbunden. Dem einen Kolben ist eine Zahnstange zugeordnet, die mit einem Zahnrad in Verbindung steht. Der andere Kolben ist starr mit einem Mitnehmer verbunden. Damit arbeitet der Spannbacken des ersten Kolbens gegnläufig und der Spannbacken des zweiten Kolbens mitläufig zur Bewegungsrichtung der Längsstange. Die beiden Kolben sind in einem geschlossenen festen Gehäuse angeordnet. Die Längsstange zwischen den beiden Kolben liegt frei im Gehäuse ohne jede Führung. Eine Führung ist auch nicht notwendig, da die Längsstange fest mit den Kolben verbunden ist.

Damit ist diese Anordnung hinsichtlich der Spannmöglichkeit festgelegt. Das bedingt, daß für unterschiedliche Spannweiten unterschiedliche Gehäuse mit entsprechendem Kolbenabstand vorrätig sein müssen.

Anordnungen die mit Hilfe einer Antriebsstange die Bewegung von Spannbacken einleiten, sind bisher als starre Verbindungen ausgeführt worden und dementsprechend auf bestimmte Einsatzmöglichkeiten beschränkt. Will man verschieden große Werkstücke zwischen den Spannbacken aufnehmen, so ist es erforderlich, sich verschieden großer Spanneinheiten zu bedienen. Daher werden Anordnungen mit Längsbewegungsstangenübertragung vornehmlich zur stationären Zentrierung eingesetzt. Sie sind im Gegensatz zum bekannten Drehmaschinenfutter jedoch vorteilhaft, da sie einfach aufgebaut sind und die Kosten niedrig gehalten werden können. Die Krafteinleitung ist auf die liegende Längsbewegung beschränkt. Die Nachteile der bisher bekannten Einrichtungen mit Längsbewegungsstange liegen darin, daß sie wenig flexibel sind, und zwar hinsichtlich der Längenausdehnung und Richtungsanordnung. Damit waren ihre Anwendungsgebiete sehr begrenzt. Gerade die Richtungsanordnung spielt aber eine wesentliche Rolle, wenn man Werkstücke in mehreren sich kreuzenden Richtungen aufnehmen und zentrierspannen will.

Die Aufgabe der Erfindung besteht darin, das Zentrierspannen universell zu gestalten und eine Zentrierspannanordnung zu schaffen, die einem Baukastenprinzip gleicht und Größenveränderungen und Richtungsveränderungen gestattet.

Diese Aufgabe wird nach der Erfindung durch die in Anspruch 1 niedergelegten Merkmale gelöst.

Die Längsbewegungsstange nach der Erfindung besteht aus mehreren Einzelstücken und überträgt ihre Kraft nur durch die Stoßverbindung der einzelnen Stücke. Die Längsbewegungsstange wird im Ganzen in Kanälen geführt, die ebenfalls aus einzelnen Teilstücken bestehen. Diese Längsbewegungsstangen lassen sich auch kreuzweise anordnen. Zur Aufrechterhaltung des Kraftflusses bedarf es lediglich einer Aussparung an der Kreuzungsstelle, so daß sich die beiden kreuzenden Stangen ungehindert bewegen. Die Aussparung ist dabei so groß zu machen wie es der Hub des Spannbacken vorschreibt. Statt der Kreuzungsverbindung der Stangen mittels ausgespartem Kreuzungsstück, kann diese Mittenverbindung auch durch Ringe hergestellt werden, derart, daß die Längsbewegungsstangen einer Kreuzung auf übereinanderliegende, verschiebbare Ringe stoßen und sich daran abstützen.

Mit der Erfindung lassen sich die Vorteile des angewendeten Prinzips der Längsbewegungsstangenübertragung, nämlich niedrige Bauhöhe, einfache Kraftbetätigung und einfacher Aufbau, mit folgenden kombinieren:
- Größenvariabilität:
   Die Anordnung mit der in variable Einzelstücke aufgetrennten Längsbewegungsstange in Kombination mit den einzelnen Gehäuseteilen ermöglicht ein flexibles Auseinanderziehen der Zentrierspannung auf beliebige, auch extreme Größen. Und für kleine Werkstücke kann der Platzbedarf wieder vollkommen zusammenschrumpfen.
   Ist die Bewegungsstange auch noch gekreuzt aufgetrennt, können so zudem z.B. Vierer- oder Sechseranordnungen unbegrenzt auseinandergezogen werden, was eine ungekannte Flexibilität bedeutet.
   Dennoch kann alles mit den gleichen einfachsten Einzelteilen aufgebaut werden, was auch die Lagerhaltung wesentlich verbilligt.
- beliebige Kombinationen:
   Mit den aufgetrennten Längsbewegungsstangenstücken und Gehäuseteilen lassen sich beliebige Lagevariationen der Zentrierspannschieber erzielen. Besonders interessant ist dabei eine Viereranordnung mit unabhängigen Bewegungsrichtungen. Damit können auch völlig paßungenaue Werkstücke einzentriert werden, was dem wesentlichen Sinn des Zentrierens entspricht, nämlich Ausmitten von Werkstücktoleranzen.
- Höhenvariabilität:
   Die Auftrennung der Längsbewegungsstange in variable Einzelstücke und des Gehäuses in einzelne Teile erlaubt es, auf dem selben Aufbau unterschiedlich hohe Gehäuseteile einzusetzten, die jeweils eine solche Höhenübertragung besitzen, bei der durch die Höhe keine Kippmomente auf die Zentrierspannschieber verursacht werden.
- Niedrige Werkstückauflagehöhe:
   Selbst bei Vierer- oder Sechseranordnung der Zentrierspannschieber ist die einzige Höhe, die unter dem Werkstück benötigt wird, die der durchlaufenden Längsbewegungsstangenstücke. Gerade für NC-Maschinen ist diese Platzersparnis sehr bedeutend.

Anhand der Zeichnungen seien nun Ausführungs- und Ausgestaltungsbeispiele der Erfindung beschrieben.
Es zeigen
Fig. 1:
   Den Längsschnitt einer erfindungsgemäßen variablen Zweieranordnung;
Fig.2:
   Die perspektivische Ansicht einer variablen Viereranordnung;
Fig.3:
   Die Draufsicht und den Seitenschnitt einer festen Viereranordnung;
Fig.4:
   Die Draufsicht einer variablen Dreieranordnung;
Fig.5:
   Die Draufsicht einer variablen Sechseranordnung.

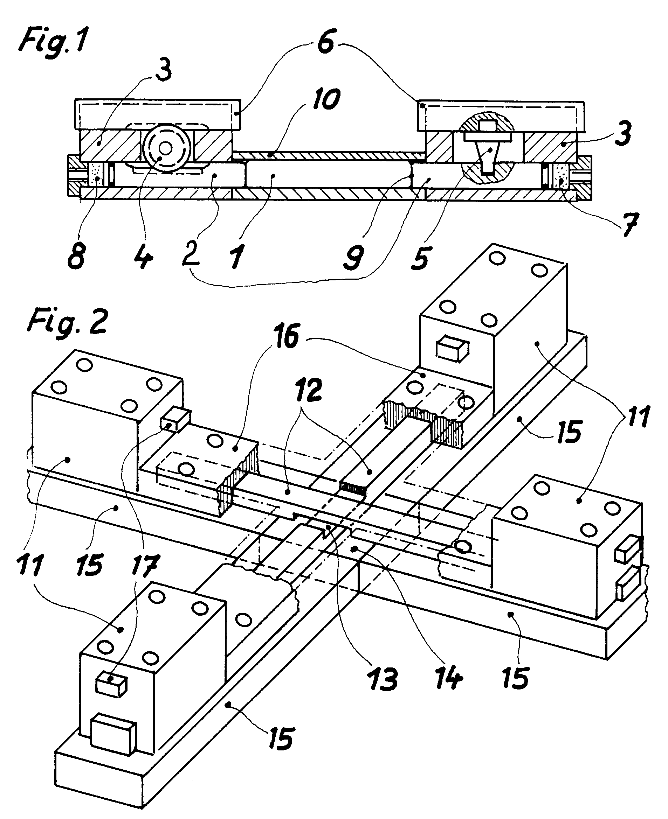

In Fig.1 ist eine liegende Längsbewegungsstange(1/2) in Einzelstücke aufgetrennt und weist dabei variabel austauschbare Einzelstücke(1) auf. Diese verbinden einzelne variabel anzuordnende Gehäuseteile(3), welche während der Zentrierspannfunktion stationär sind.
Im hier linken Gehäuseteil befindet sich als bewegungsumkehrendes Element ein Ritzel(4), im rechten als -nichtumkehrendes Element ein Nocken(5), und in beiden ein Zentrierspannschieber(6).
Die Anordnung ist kraftbetätigt, wobei hier in den Gehäuseteilen befindliche Längsbewegungsstangenstücke(2) direkt als hydraulische Kolben ausgebildet sind. Zum Zustellen wird Öl in den Ölraum(7) des rechten Elementes gepumpt, und zum Rückstellen in den Ölraum(8) des linken.
Die Längsbewegungsstangenstücke(1u.2) sind als Schubstange mit einfacher Stoßverbindung(9) ausgebildet, und werden gegen Ausknicken und Verschmutzen von variablen Tunnels(10) überdeckt und geführt.
Die hier gezeigte Anordnung gestattet bei einfachstem Aufbau ein Auseinanderziehen auf beliebige Größen.

In Fig.2 sind vier variabel anzuordnende Gehäuseteile(11) mit in variabel austauschbare und gekreuzt aufgetrennten Längsbewegungsstangenstücken(12) dargestellt. Die gekreuzten Stücke und damit die Bewegungen sind voneinander unabhängig, und erlauben so ein unabhängiges Einzentrieren von zwei Seiten. Damit das Werkstück von einem Zentrierspannschieberpaar noch verschoben werden kann, nachdem das andere schon zugegriffen hat, müssen die Krafteinleitungen der gekreuzten Richtungen druckabhängig miteinander verbunden sein.
Die Kreuzung der Längsbewegungsstange weist übereinanderliegende Aussparungen(13) auf, und befindet sich auf einem Verbindungsstück(14), das mit vier Rasterplattenteilen(15) verschraubt ist.
Darüber sind variable Tunnels(16) angedeutet.
Zur Außen- und Innenzentrierspannung ragen die Zentrierspannschieber(17) jeweils beidseitig heraus.
Das Werkstück kann äußerst niedrig zur Anlage kommen,da nur die Bewegungsstangen(12) unter ihm durchlaufen, und die Gehäuseteile(11) außen angeordnet sind. Außerdem kann so mit unterschiedlich hohen Gehäuseteilen in größere Höhen gegangen werden, auch ohne Kippmomente etwa auf hohe Backen einzuleiten.
Ähnlich der gezeigten Anordnung lassen sich mit der Erfindung beliebige Variationen in Größe und Kombination erzielen.

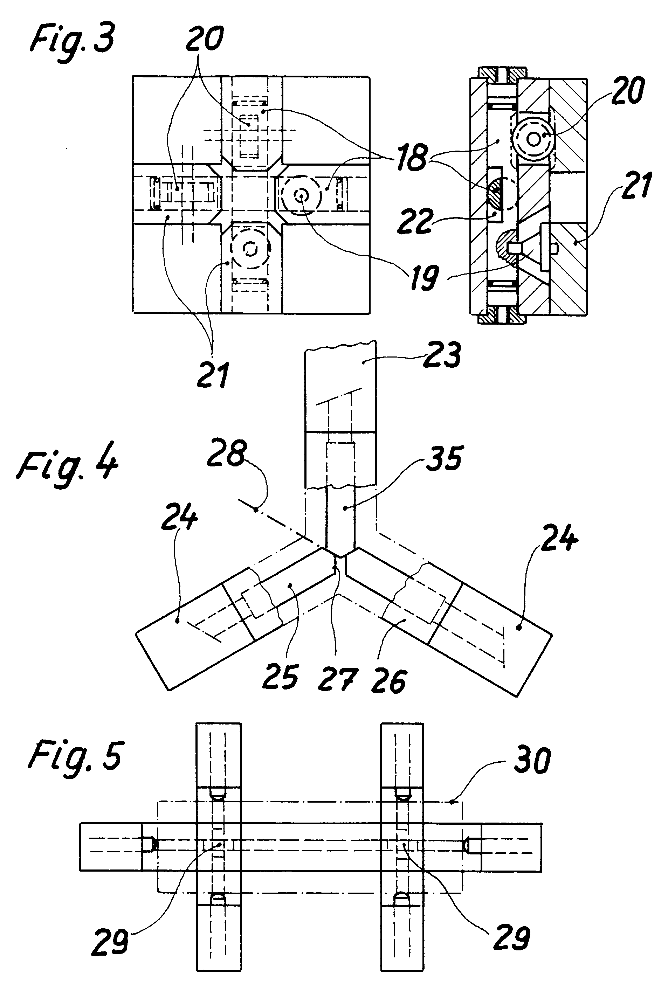

Fig.3 weist gekreuzt aufgetrennte Längsbewegungsstangenstücke(18) auf, an denen sich jeweils bewegungsumkehrende(20) und -nichtumkehrende(19) Übertragungselemente befinden, die die Bewegung auf die Zentrierspannschieber(21) weiterleiten.
Die Stangenstücke sind direkt als hydraulische Kolben ausgebildet, und lassen sich unabhängig bewegen. W.o. müssen die Krafteinleitungen auf beide Stücke voneinander druckabhängig sein.
An der Kreuzung befinden sich w.o. übereinanderliegende Aussparungen(22). Eine Kreuzung von Längsbewegungsstangenstücken kann, falls in der Mitte der Anordnung ein Durchgangsloch benötigt wird, auch aus übereinanderliegenden, verschiebbaren Ringen aufgebaut sein.

Auf die Zentrierspannschieber werden übliche Aufsetzbacken aufgeschraubt.
Ein solches Vierbackenfutter hat zwar nur eine übliche, kleinere Größenvariabilität, besticht jedoch durch den einfachen Aufbau und die beiden unabhängigen Zentrierrichtungen.

In Fig. 4 befinden sich einzelne variable Gehäuseelemente(23u.24) in regelmäßiger Dreieranordnung. Ebenso sind beliebig unregelmäßige Anordnungen möglich.
Drei variable Schubstangenstücke(25), überdeckt von Tunnels(26), treffen sich mit hier dachartigen schrägen Enden(27), und übertragen gleiche Wege, da ihre Winkel jeweils von der Winkelhalbierenden(28) bestimmt werden. Die Zustellbewegung wird nun z.B. auf das eine Element(23) eingeleitet, und die Rückstellbewegung auf die anderen beiden(24).

Die Anordnung in Fig.5 weist zwei Kreuzungen(29) auf, ist aus den obig beschriebenen Elementen aufgebaut, und soll die flexible Anwendung der Anordnung auch für lange Werkstücke(30) demonstrieren.

## Patentansprüche

1. Zentrierspannanordnung mit linearer Kraftbetätigung der Zentrierspannschieber (6,17) über ein Längsbewegungsgestänge (1,2), bei dem die gegenläufige Bewegung der Zentrierspannschieber durch eine Längsbewegung des Längsbewegungsgestänges eingeleitet wird, wobei die Längsbewegungsstange an jedem Ende in einem Teil eines Gehäuses geführt ist, und diese Teile des Gehäuses mit je einem Zentrierspannschieber bestückt sind und in einem dieser Teile des Gehäuses ein Übertragungselement (4) angeordnet ist, das die Bewegung der Stange richtungsumkehrend auf seinen Zetrierspannschieber überträgt, und in dem anderen Teil des Gehäuses ein Übertragungselement (5) angeordnet ist, das die Bewegung der Stange richtungsgleich auf seinen Zentrierspannschieber überträgt, ***dadurch gekennzeichnet***, daß besagte Teile des Gehäuses als einzelne Gehäuse teile (3) ausgeführt, und mit je einem Längsbewegungsstangenstück (2) versehen sind, das annähernd mit dem Gehäuseteil abschließt, daß zwischen den beiden Gehäuseteilen (3) ein oder mehrere Tunnelstücke (10) angeordnet sind und daß in dem gebildeten Tunnel ein oder mehrere Längsbewegungsstangenstücke (1) geführt sind, die mit ihren Stirnflächen (9) aneinander stoßen, so daß die Längsbewegungsstangenstücke (1) in ihrer gesamten Länge den Raum zwischen den Gehäuseteilen (3) innerhalb der Tunnel kraftschlüssig überbrücken, so daß eine eingeleitete Kraft zwischen den Gehäuseteilen (3) über die Längsbewegungsstangenstücke (1,2) wirksam ist.

2. Zentrierspannanordnung nach Anspruch 1, ***dadurch gekennzeichnet, daß*** zwei Gehäuseteile (24) mit je einem bewegungsgleichgerichtetem Element und ein Gehäuseteil (23) mit einem bewegungsentgegengesetzt gerichteten Element mit ihren in Tunnel geführten Längsbewegungsstangen (25,35) sternförmig zu einander angeordnet sind, wobei die Längsbewegungsstangen (25,35) sich -bezogen auf einen gemeinsamen Mittelpunkt- mit abgeschrägten Enden (27) treffen und daß die Winkelhalbierende zweier sich treffenden Stangenstücke jeweils die Winkel der schrägen Enden (27) bestimmt.

3. Zentrierspannanordnung nach Anspruch 1, ***dadurch gekennzeichnet***, daß die Gehäuseteile (11) kreuzweise gegenüberstehend angeordnet sind und mit den in Tunnel (16) geführten Längsbewegungsstangenstücken (12) paarweise miteinander verbunden sind und daß im Bereich des Kreuzungspunktes der Längsbewegungsstangen ein Verbindungsstück (14) vorgesehen ist, das Ausnehmungen (13) für das Übereinandergleiten der Kreuzungsstangenstücke besitzt.

4. Zentrierspannanordnung nach Anspruch 3, ***dadurch gekennzeichnet, daß*** das jeweilige Mittelstück der die Gehäuseteile verbindenden Längsbewegungsstangen aus einem Ring gebildet ist.

## Claims

1. Device for centring and clamping, for linear power operation of the centring clamping slides (6, 17) via a bar linkage for longitudinal movement (1, 2), wherein the oppositely directed movement of said centring clamping slides is initiated by a longitudinal movement of said bar linkage for longitudinal movement, wherein said longitudinal movement bar is guided by each end in one part of a housing, and these parts of the housing are provided each with a centring clamping slide while in one of these parts of the housing a transmitting element (4) is disposed which transmits the rod movement to its centring clamping slide, with a reversal of the direction, while in the other part of the housing a transmitting element (5) is provided which transmits the movement of the rod in the same direction to its centring clamping slide*, characterized in* that said parts of the housing are configured as individual housing elements (3) and provided each with a segment (2) of said longitudinal movement rod, which is approximately flush with said housing element; that between said two housing elements (3) one or more tunnel elements (10) are provided, and that in the tunnel so formed one or several segments (1) of said longitudinal movement rod are guided which abut against each other by their faces (9) such that said segments of said longitudinal movement rod (1) bridge, over their entire length, the space between said housing elements (3) within said tunnels by adhesion so that a force introduced therein will be operative via said longitudinal movement rod segments (1, 2) between said housing elements.

2. Device for centring and clamping according to Claim 1, *characterized in* that two housing elements (24), each with an element moving in the same direction, and one housing element (23), with an element moving in the opposite direction, are arranged in a mutual star relationship by their longitudinal movement rods (24, 35) guided in tunnels, wherein said longitudinal movement rods (25, 35) meet each other by bevelled ends (27) - relative to a common centre - and that the angle bisector between two meeting rod segments determines the respective angles of said bevelled ends (27).

3. Device for centring and clamping according to Claim 1, *characterized in* that said housing elements (11) are disposed in crosswise opposition and are interconnected in pairs with said longitudinal movement rod segments (12) passed into tunnels (16), and that in the one of the point of intersection of said longitudinal movement rods a connecting element (14) is disposed which is provided with recesses (13) enabling the crossing rod segments to slide one over the other.

4. Device for centring and clamping according to Claim 3, *characterized in* that the respective central segment of said longitudinal movement rods interconnecting said housing elements is formed by a ring.

## Revendications

1. Dispositif de serrage à centrage, pour une opération linéaire mécanique des coulisses de serrage à centrage (6, 17) via une tringlerie à mouvement longitudinal (1, 2), dans lequel le mouvement en sens opposé desdites coulisses de serrage à centrage est induit par un mouvement longitudinal de ladite tringlerie pour un mouvement longitudinal, dans lequel la tige à mouvement longitudinal est guidée, par chacune de ses extrémités, dans une partie d'un carter, et dans lequel ces parties du carter sont pourvues chacun d'une coulisse de serrage à centrage, pendant que dans une de ces parts du carter un élément de transmission (4) est disposé pour transmettre le mouvement de la tige à sa coulisse de serrage à centrage, à inversion du sens, pendant que dans l'autre partie du carter un élément de transmission (5) est disposé pour transmettre le mouvement de la tige en même sens à sa coulisse de serrage à centrage, *caractérisé en ce* que lesdites parties du carter sont formées sous forme d'éléments de carters individuels (3), dont chacun est pourvu d'un segment (2) de ladite tige à mouvement longitudinal et est affleuré approximativement dudit élément de carter; en ce qu'un ou plus éléments de passage (10) sont disposées entre lesdits éléments de carter (3), et en ce qu'à l'intérieur du passage ainsi établi, un ou plus segments (1) de ladite tige à mouvement longitudinal sont guidés, qui portent l'un contre l'autre par leur faces (9) de façon que lesdits segments de ladite tige à mouvement longitudinal jettent un pont, par toute leur longueur, sur l'espace entre lesdits éléments de carter (3) à l'intérieur desdits passages, par adhésion, de façon qu'une force y introduite prend de l'effet par lesdits segments de la tige à mouvement longitudinal (1, 2) entre lesdits éléments de carter.

2. Dispositif de serrage à centrage selon la revendication 1, *caractérisé en ce* que deux éléments de carter (24), chacun à un élément mobile en même sens, et un élément de carter (23), à un élément mobile en sens opposé, sont disposés, l'un relativement à l'autre, en étoile par leurs tiges à mouvement longitudinal (24, 35) guidées dans des passages, dans lequel lesdites tiges à mouvement longitudinal (25, 35) se rencontrent par des extrémités biseautées (27) - relativement à un centre commun - et en ce que la bissectrice entre deux segments de tige croisés détermine les angles respectifs desdites extrémités biseautés (27).

3. Dispositif de serrage à centrage selon la revendication 1, *caractérisé en ce* que lesdits éléments de carter (11) sont disposés l'un en face de l'autre sous forme croisée et sont reliés, l'un à l'autre, en paires avec lesdits segments de tige à mouvement longitudinal (12) introduits dans des passages (16), et en ce que dans la zone du point d'intersection desdites tiges à mouvement longitudinal, un éléments de raccord (14) est disposé, qui présente des creux (13), qui permettent que les segments de tige croisés puissent coulisser l'un sur l'autre.

4. Dispositif de serrage à centrage selon la revendication 3, *caractérisé en ce* que le segment central respectif desdites tiges à mouvement longitudinal, qui raccordent lesdits éléments de carter l'un à l'autre, est formé par un anneau.
